(19) Europäisches Patentamt / European Patent Office / Office européen des brevets

(11) EP 2 601 234 B1

(12) **EUROPEAN PATENT SPECIFICATION**

(45) Date of publication and mention of the grant of the patent:
**18.01.2017 Bulletin 2017/03**

(21) Application number: **11745743.2**

(22) Date of filing: **01.08.2011**

(51) Int Cl.:
***C08G 18/72*** (2006.01) ***C08G 18/76*** (2006.01)
***C08G 18/79*** (2006.01) ***C08G 18/10*** (2006.01)
***C08G 18/12*** (2006.01) ***C08G 18/42*** (2006.01)

(86) International application number:
**PCT/EP2011/063245**

(87) International publication number:
**WO 2012/016961 (09.02.2012 Gazette 2012/06)**

(54) **A REACTION SYSTEM FOR PREPARING POLYURETHANE MICROCELLULAR FOAM, A POLYURETHANE MICROCELLULAR FOAM AND THE USE THEREOF**

REAKTIONSSYSTEM ZUR HERSTELLUNG VON MIKROZELLULAREM POLYURETHANSCHAUMSTOFF, MIKROZELLULARER POLYURETHANSCHAUMSTOFF UND SEINE VERWENDUNG

SYSTÈME DE RÉACTION POUR PRÉPARER UNE MOUSSE MICROCELLULAIRE DE POLYURÉTHANE, MOUSSE MICROCELLULAIRE DE POLYURÉTHANE ET UTILISATION DE CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.08.2010 CN 201010242692**

(43) Date of publication of application:
**12.06.2013 Bulletin 2013/24**

(73) Proprietor: **Covestro Deutschland AG**
**51373 Leverkusen (DE)**

(72) Inventors:
- **NEFZGER, Hartmut**
  **50259 Pulheim (DE)**
- **ZHOU, Zhiping**
  **Shanghai 201206 (CN)**
- **ZHANG, Yuedong**
  **Shanghai 200127 (CN)**
- **SHI, Jingui**
  **215500 Jiang Su Province (CN)**

(74) Representative: **Levpat**
**c/o Covestro AG**
**Gebäude 4825**
**51365 Leverkusen (DE)**

(56) References cited:
**EP-A1- 0 006 685**
**WO-A2-2011/070153**
**DE-A1-102007 054 003**
**GB-A- 1 475 541**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 601 234 B1

## Description

### Technical Field

The present invention relates to a reaction system for preparing polyurethane microcellular foam, a polyurethane microcellular foam and the use thereof.

### Background

Polyrethane microcellular foam, which possessed good physical and mechanical properties, has been widely used in the industry, especially for preparing shoe materials.

Polyurethane microcellular foam was usually prepared by reacting isocyanates and polyols, wherein the method thereof can not only be selected a one-step reaction between the isocyanates and polyols, but also a prepolymer approach.

Demould time was one of the key parameters for making polyurethane microcellular foam, for example, the faster the demould time, the higher production efficiency and lower energy consumption. In the prior art, the demould time could be shortened by increasing catalyst amount in the reaction system, as described in <Polyurethane Handbook: Chemistry, Raw Materials, Processing, Application, Properties (2nd Edition)> (Edited by Gunter Oertel, Bayer AG). However, there were several disadvantages caused by increasing amount of catalyst, for example, it would reduce the cream time which results in poor processability; furthermore, and it could deteriorate physical properties such as anti-hydrolysis performance; in addition, the high amount of catalyst was a potential threat to the environment.

Therefore, many efforts have been taken to explore new reaction systems for making polyurethane microcellular foams to shorten the demould time while maintain the processability and physical properties.

### Invention Content

The objective of this invention is to provide a reaction system for preparing polyurethane microcellular foam. According to an example of this invention, the reaction system comprises a component A and a component B, wherein the component A is an isocyanate prepolymer, comprising a reaction product of reactant components as follows:

a1) one or more polyisocyanates;

a2) one or more polyester polyols, wherein the polyester polyols comprise 10-60 wt.% succinic acid units (I), based on 100 wt.% of the polyester polyols;

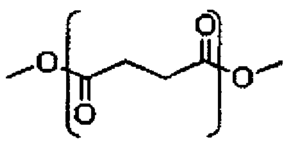

(I)

the NCO content of the isocyanate prepolymer is 16-20 wt.%, based on 100 wt.% of isocyanate prepolymer;
the component B comprises:

b1) one or more polyols;

b2) 0.001-10 wt.% of one or more catalysts, based on 100 wt.% of polyurethane microcellular foam; and

b3) one or more chain extenders.

Another objective of this invention is to provide a polyurethane microcellular foam. According to an example of this invention, the polyurethane microcellular foam comprises a reaction product of reaction component A and reaction component B, wherein

the component A is an isocyanate prepolymer, comprising the reaction product of reactant components as follows:

a1) one or more polyisocyanates;

a2) one or more polyester polyols, wherein the polyester polyols comprise 10-60 wt.% succinic acid units (1), based on 100 wt.% of the polyester polyols;

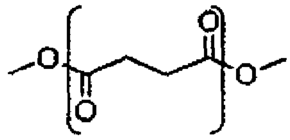

(I)

the NCO content of the isocyanate prepolymer is 16-20 wt.%, based on 100 wt.% of isocyanate prepolymer; the component B comprises:

b1) one or more polyols;

b2) 0.001-10 wt.% of one or more catalysts, based on 100 wt.% of polyurethane microcellular foam; and

b3) one or more chain extenders.

Another objective of this invention is to provide an isocyanate terminated prepolymer. According to an example of this invention, the isocyanate terminated prepolymer comprises a reaction product of reaction system containing a1) and a2) as follows:

a1) one or more polyisocyanates;

a2) one or more polyester polyols, wherein the polyester polyols comprise 10-60 wt.% succinic acid units (I), based on 100 wt.% of the polyester polyols;

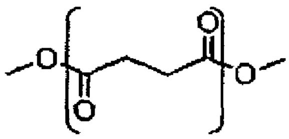

(I)

the NCO content of the isocyanate prepolymer is 16-20 wt.%, based on 100 wt.% of isocyanate prepolymer.

Another objective of this invention is to provide a use of the reaction system provided in this invention in preparing polyrethane microcellular foam.

Another objective of this invention is to provide a use of the isocyanate terminated prepolymer provided in this invention in preparing polyurethane microcellular foam.

Another objective of this invention is to provide a use of the polyurethane microcellular foam provided in this invention in preparing shoes.

By using the reaction components provided in this invention, the demould time for preparing the polyurethane microcellular foam can be reduced. The obtained polyurethane microcellular foam possesses good physical and mechanical properties. The polyurethane microcellular foam is particularly suitable to prepare shoes.

**Specific Mode for Carrying Out the Invention**

<u>Reaction system for preparing polyurethane microcellular foam</u>

The reaction system for preparing polyurethane microcellular foam comprises component A and component B. The component A is isocyanate-terminated prepolymer, wherein the isocyanate-terminated prepolymer is a reaction product of a1 and a2, described in details in the section of Reaction System for Preparing Isocyanate Terminated Prepolymer in this Description.

The component B comprises b1, b2 and b3.

The b1 is polyol. The second polyol can be one kind of second polyol, or a mixtures of several kinds of second polyols. The second polyol has an average molecular weights of 1,000-10,000, and functionalities of 1 to 5, preferably

1.5 to 3. The said second polyol may prefer, but not limited to, polyester polyols, polyether polyols, polycarbonate polyols, and their mixtures.

The polyester polyol can be produced from the reaction of organic dicarboxylic acids or dicarboxylic acid anhydrides with polyhydric alcohols. The dicarboxylic acids can be selected from, but not limited to, aliphatic carboxylic acids containing 2-12 carbon atoms, for example, succinic acid, malonic acid, glutaric acid, adipic acid, suberic acid, azelaic acid, sebacic acid, decane-dicarboxylic acid, maleic acid, fumaric acid, phthalic acid, isophthalic acid, terephthalic acid, or their mixtures. The anhydrides can be selected from, but not limited to, for example, phthalic anhydride, terachlorophthalic anhydride, maleic anhydride, or their mixtures.The polyhydric alcohols include ethanediol, diethylene glycol, 1,2-propanediols, 1,3-propanediols, dipropylene glycol, 1,3-methylpropanediol, 1,4-butanediol, 1,5-pentanediol, 1,6-hexanediol, ncopentyl glycol, 1,10-decanediol, glycerol, trimethylol-propane, or their mixtures. The polyester polyols can also be selected from the polyester polyols prepared by lactones. Such polyester polyols, which are prepared by lactones, can be selected from, but not limited to, ε-caprolactone.

The polyether polyols can be produced by known process, for example, by the reaction of alkene oxides with polyhydric alcohol starters in the presence catalysts. The catalysts can be selected from, but not be limited to, alkali hydroxides, alkali alkoxides, antimony pentachloride, boron fluoride etherate, or their mixtures. The alkene oxides, can be selected from, but not be limited to, tetrahydrofuran, ethylene oxide, 1,2-propylene oxide, 1,2-butylene oxide, 2,3-butylene oxide, styrene oxide, or their mixtures. The polyhydric alcohol starters can be selected from, but not be limited to, polyhydric compounds, such as, water, ethylene glycol, 1,2-propanediols, 1,3-propanediols, diethylene glycol, trimethylol-propane, or their mixtures.

The polycarbonate polyols can be selected from, but not be limited to, polycarbonate diols. The polycarbonate diols can be produced by the reaction of diols with dialkyl or diaryl carbonates or phosgene. The diols can be selected from, but not be limited to, 1,2-propanediol, 1,3-propanediol, 1,4-butanediol, 1,5-pentanediol, 1,6-hexanediol, diethylene glycol, trioxyethylene glycol, or their mixture. The dialkyl or diaryl carbonates can be selected from, but not be limited to, diphenyl carbonate.

The b2 is catalyst. The catalysts can be selected from, but not be limited to, amine catalysts, organo-metallic compounds, or their mixture. The amine catalysts can be selected from, but not be limited to, triethylamine, tributylamine, N-methylmorpholine, N-ethylmorpholine, N,N,N',N'-tetramethyl-ethylenediamine, pentamethyldiethylene-triamine, N,N-methylbenzylamine, N,N-dimethylbenzylamine, or their mixture. The organo-metallic compounds catalysts can be selected from, but not be limited to, organo-tin compounds, such as, tin(II) acetate, tin(II) octoate, tin(II) ethylhexonate, tin(II) laurate, dibutyltin oxide, dibutyltin dichloride, dibutyltin diacetate, dibutyltin dilaurate, dibutyltin maleate, dioctyltin diacetate, or their mixture. The amount of the b2 is 0.001-10 wt.%, based on 100 wt.% of the polyurethane microcellular foam.

The b3 is chain extender. The chain extender can be selected from, but not be limited to, active hydrogen atom containing compounds having a molecular weight less than 800, preferably 18-400. The active hydrogen atom containing compounds can be selected from, but not be limited to, alkanediols, dialkylene glycols, polyalkylene polyols, or their mixture, such as, ethanediol, 1,4-butanediol, 1,6-hexanediol, 1,7-heptanediol, 1,8-octanediol, 1,9-nonanediol, 1,10-decanediol, diethylene glycol, dipropylene glycol, polyoxyalkylene glycols, or their mixtures. The active hydrogen atom containing compounds can also comprises branched chain and/or unsaturated alkanediols, such as 1,2-propanediol, 2-methyl-1,3-propanediol, 2,2-dimethyl-1,3-propanediol, 2-butyl-2-ethyl-1,3-propanediol, 2-butene-1,4-diol, 2-butyne-1,4-diol, alkanolamines, N-alkyldialkanolamines; the N-alkyldialkanolamines can be selected from, but not be limited to, ethanolamine, 2-aminopropanol, 3-amino-2,2-dimethylpropanol, N-methyl-diethanolamines, N-ethyl-diethanolarnines, or their mixture. The active hydrogen atom containing compounds can also includes aliphatic amines, aromatic amines, such as 1,2-ethylenediamine, 1,3-propylenediamine, 1,4-butylenediamine, 1,6-hexamethylenediamine, isophoronediamine, 1,4-cyclohexamethylenediamine, N,N'-diethyl-phenylenediamine, 2,4-diaminotoluene, 2,6-diaminotoluene, or their mixtures.

The component B can further comprise b4 and b5.

The b4 is blowing agent. The blowing agents can be selected from, but not be limited to, water, halohydrocarbons, hydrocarbons, and gases. The halohydrocarbons can be selected from, but not be limited to, monochlorodifuloromethane, dichloromonofluoromethane, dichlorofluoromethane, trichlorofluromethane, or their mixtures. The hydrocarbons can be selected from, but not be limited to, butane, pentane, cyclopentane, hexane, cyclohexane, heptane, or their mixtures. The gases can be selected from, but not be limited to, air, $CO_2$, $N_2$, or their mixtures.

The b5 is surfactant. The surfactant can be selected from, but not be limited to, polyoxyalkylene derivatives of siloxane. The amount of the b5 is 0.01 to 5 wt.%, based on 100 wt.% of the polyurethane microcellular foam.

<u>Polyurethane Microcellular Foam</u>

The polyurethane microcellular foam provided in this invention is a reaction product of the above mentioned reaction system for preparing polyurethane microcellular foam.

The polyurethane microcellular foam can be prepared by the said reaction system in moulds.

The moulds can be selected from conventional moulds used for preparing polyurethane microcellular foam.

The NCO index of the reaction can be optimized by using known method.

The NCO index of the reaction can be selected from, but not limited to, 50-160, preferably 80-120, wherein the NCO index X(%) is defined as below

$$X(\%)=\frac{[\text{moles of isocyanate group (NCO group) in Component A}] \times 100\%}{[\text{moles of NCO reactive group in Component B}]}$$

Reaction System for Preparing Isocyanate-Terminated Prepolymer

The isocyanate-terminated prepolymer provided in this invention comprises a reaction product of a reaction system comprising a1 and a2.

The a1 comprises one or more polyisocyanates. The polyisocyanate can be one polyisocyanate or a mixture of several polyisocyanates. The polyisocyanate can be described by the formula, $R(NCO)_n$, wherein R represents an aliphatic hydrocarbon radical containing 2-18 carbon atoms, an aromatic hydrocarbon radical containing 6-15 carbon atoms, or an araliphatic hydrocarbon radical containing 8-15 carbon atoms, n=2-4.

The polyisocyanate can be selected from, but not be be limited to, ethylene diisocyanate, 1,4-tetramethylene diisocyanate, hexamethylene diisocyanate (HDI), 1,2-dodecane diisocyanate, cyclobutane-1,3-diisocyanate, cyclohexane 1,3-diisocyanate, 1,4-diisocyanate, 1-isocyanato-3,3,5-trimethyl-5-isocyanatomethyl-cyclohexane, 2,4-hexahydrotoluene diisocyanate, hexahydro-1,3-phenylene diisocyanate, hexahydro-1,4-phenylene diisocyanate, perhydro-2,4-diphenylmethane diisocyanate, perhydro-4,4'-diphenylmethane diisocyanate, 1,3- phenylene diisocyanate, 1,4-phenylene diisocyanate, 1,4-durol diisocyanate, 1,4-stilbene diisocyanate, 3,3'-dimethyl-4,4'-biphenylene diisocyanate, toluene 2,4-diisocyanate (TDI), 2,6-diisocyanate (TDI), diphenylmethane-2,4'-diisocyanate (MDI), diphenylmethane-2,2'-diisocyanate (MDI), diphenylmethane-4,4'-diisocyanate (MDI), naphthylene-1,5-diisocyanate (NDI), their mixture, their isomer, the mixture of they and their isomer.

The polyisocyanate may also include polyisocyanate modified by carbodiimide, allophanate and isocyanate. The polyisocyanate can be selected from, but not be limited to, diphenylmethane diisocyanate, diphenylmethane diisocyanate modified by carbodiimide, their mixture, their isomer, or the mixture of they and their isomer.

The a2 is one or more polyester polyols. The polyester polyol has an average molecular weight of 1,000-10,000, the functionality is 1-5, preferably 1.5-3. The polyester polyol can be produced from the reaction of organic dicarboxylic acids or dicarboxylic acid anhydrides with polyhydric alcohols. The dicarboxylic acids can be selected from, but not limited to, aliphatic carboxylic acids containing 2-12 carbon atoms, for example, succinic acid, malonic acid, glutaric acid, adipic acid, suberic acid, azelaic acid, sebacic acid, decane-dicarboxylic acid, maleic acid, fumaric acid, phthalic acid, isophthalic acid, terephthalic acid, or their mixtures. The anhydrides can be selected from, but not limited to, for example, phthalic anhydride, terachlorophthalic anhydride, maleic anhydride, or their mixtures.The polyhydric alcohols include ethanediol, diethylene glycol, 1,2-propanediols, 1,3-propanediols, dipropylene glycol, 1,3-methylpropanediol, 1,4-butanediol, 1,5-pentanediol, 1,6-hexanediol, neopentyl glycol, 1,10-decanediol, glycerol, trimethylol-propane, or their mixtures. The polyester polyols can also be selected from the polyester polyols prepared by lactones. Such polyester polyols, which are prepared by lactones, can be selected from, but not limited to, ε-caprolactone.

The polyester polyol comprises 10-60 wt.% succinic acid units, preferably 20-58 wt.%, most preferably 40-53 wt.%, based on 100 wt.% of the polyester polyols;

The structure of the succinic acid unit (I) is described as below

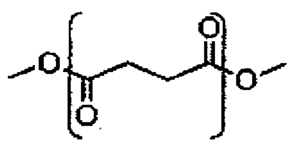

(I)

The NCO content of the said isocyanate prepolymer is 16-20 wt.%, based on 100 wt% of isocyanate prepolymer

The Method for Preparing Isocyanate-Terminated Prepolymer

The isocyanate-terminated prepolymer can be prepared by conventional methods, for example, as described below,

The a1 and a2 are charged into a reactor, mixed and reacted. After the completion of reaction at 40-100❑; the isocyanate-terminated prepolymer is obtained.

Application of Polyurethane Microcellular Foam

The polyurethane microcellular foam can be used to produce shoe materials.

**Example**

The Examples and the methods provided in the present invention are illuminative but not restrictive.

The Materials mentioned in the Description

| | | |
|---|---|---|
| Bayflex2003E | Adipate polyester polyol, having an average molecular weight of 2000 and an OH value of 56 mgKOH/g | Available from Bayer MaterialScience; |
| PESSA-1 | Succinate polyester polyol, prepared by condensation polymerization of succinic acid with 1,3-propanediol, having an average molecular weight of 2000, an OH value of 56 mgKOH/g and a succinic acid unit content of 53 wt.% | Available from Bayer Material Science; |
| PESSA-2 | Succinate polyester polyol, prepared by condensation polymerization of succinic acid with 1,3-propanediol and diethylene glycol, having an average molecular weight of 2000, an OH value of 56 mgKOH/g and a succinic acid unit content of 53 wt.% | Available from Bayer MaterialScience: |
| Dabco EG | Tertiary amine catalysts | Available from Air Products |
| Dabco DC 193 | Siloxane surfactant | Available from Air Products |

Preparation of Isocyanate Terminated Prepolymer

Example E1-E3 and Comparative Examples C1-C2

4,4'-MDI and polyols were introduced into the reactor in accordance with the materials and amounts thereof listed in Table 1.

After the reactor was cooled to 65°C, CD-MDI was introduced into the reactor and mixed for 30 mins.

After the reactor was cooled to the room temperature, an isocyanate terminated prepolymer A1-A5 had been obtained.

Table 1 Preparation of isocyanate terminated prepolymer

| Example | E1 | E2 | E3 | C1 | C2 |
|---|---|---|---|---|---|
| 4,4'-MDI (wt.%) | 56 | 56 | 56 | 56 | 56 |
| CD-MDI (wt.%) | 6 | 6 | 6 | 6 | 6 |
| Bayflex 2003E (wt.%) | - | - | 19 | 34.2 | 38.0 |
| PESSA-1 (wt.%) | 38.0 | - | 19 | 3.8 | - |
| PESSA-2 (wt.%) | - | 38.0 | - | - | - |
| NCO (wt.%) | 19.3 | 19.3 | 19.3 | 19.3 | 19.3 |
| Obtained isocyanate terminated prepolymer | A1 | A2 | A3 | A4 | A5 |

In the Comparative Examples C1, the polyester polyol for preparing isocyanate prepolymer A4 comprised succinate polyester polyol (PESSA-1), wherein, the content of the succinic acid units was 5 wt.%, based on 100 wt.% of polyester polyols.

Preparation of Polyurethane Microcellular Foam

The isocyanate terminated prepolymers provided in Example E1-E3 and Comparative Examples C1-C2 were marked as Component A.

The other components (such as polyols, chain extenders, blowing agents, catalysts and surfactants) were marked as Component B.

Example E4-E9 and Comparative Examples C3-C6

The Component B was mixed by using mechanical stirrer and loaded into a charging bucket of an injection molding machine at 45°C. The amount of the Component B was listed in Table 2.

The Component A was introduced into the charging bucket. The temperature of the charging bucket was 50°C.

The Component A and Component B were mixed by a mixing head, and injected into an aluminum folding mould. The temperature of the mould was 50°C. The NCO index of the reaction can be optimized by the methods known in the prior art.

The mould was closed, and the foam was demoulded after certain minutes to obtain a polyurethane microcellular foam.

The demould time, physical properties and mechanical properties of the obtained polyurethane microcellular foam were listed in Table 2 and Table 3.

Table 2 Preparation of Polyurethane Microcellular Foam

| Example | | E4 | C3 | C4 |
|---|---|---|---|---|
| Component A | | A1 | A5 | A5 |
| Component B | Bayflex 2003E (weight parts) | 100 | 100 | 100 |
| | Ethylene glycol (weight parts) | 7 | 7 | 7 |
| | Dabco EG (weight parts) | 1.5 | 1.5 | 1.8 |
| | DC193 (weight parts) | 0.4 | 0.4 | 0.4 |
| | Water (%) | 0.45 | 0.45 | 0.45 |
| Reactivity | Cream time (s) | 4 | 5 | 4 |
| | Demould time (s) | 150 | 250 | 200 |

According to the Table 2:

The polyurethane microcellular foams were prepared by the prepolymer A1.

The reactivity of process for preparing the polyurethane microcellular foams was good.

Comparing with the traditional reaction system (Comparative Examples C3, 250 seconds), based on the same amount of catalyst, the demould time was reduced to 150 seconds when the cream time was equivalent.

Table 3 Preparation of Polyurethane Microcellular Foam

| Example | | E5 | E6 | E7 | E8 | E9 | C3 | C5 | C6 |
|---|---|---|---|---|---|---|---|---|---|
| Component A | | A 1 | A3 | A2 | A2 | A 1 | A5 | A4 | A5 |
| Component B | Bayflex 2003E (weight parts) | - | - | - | 50 | - | 100 | 100 | - |
| | PESSA-2 (weight parts) | 100 | 100 | 100 | 50 | 100 | - | - | 100 |
| | Ethylene glycol (weight parts) | 7 | 7 | 7 | 7 | 8 | 7 | 7 | 7 |

(continued)

| Example | | E5 | E6 | E7 | E8 | E9 | C3 | C5 | C6 |
|---|---|---|---|---|---|---|---|---|---|
| | Dabco EG (weight parts) | 1.5 | 1.5 | 1.5 | 1.5 | 1.5 | 1.5 | 1.5 | 1.5 |
| | DC193 (weight parts) | 0.4 | 0.4 | 0.4 | 0.4 | 0.4 | 0.4 | 0.4 | 0.4 |
| | Water (weight parts) | 0.45 | 0.45 | 0.45 | 0.45 | 0.45 | 0.45 | 0.45 | 0.45 |
| Reactivity | Cream time (s) | 4 | 4 | 4 | 4 | 4 | 5 | 4 | 4 |
| | Demould time (s) | 150 | 180 | 150 | 140 | 160 | 250 | 250 | 210 |
| | Density (kg/m3) | 550 | 550 | 550 | 550 | 550 | 550 | 550 | 550 |
| | Tensile strength (MPa) | 5.8 | 5.4 | 6.4 | 5.6 | 6.9 | 6.1 | 5.6 | - |
| Physical Properties | Tear strength (kN/m) | 7.5 | 6.9 | 4.6 | 5.1 | 7.9 | 7.0 | 7.0 | - |
| | Elongation at break (%) | 473 | 482 | 410 | 418 | 401 | 478 | 450 | - |
| | Ross Flex (cut increase mm, r.t., 40k cycles) | 0.1 | 0.1 | 0.2 | 0.1 | 0.2 | 0.1 | 0.1 | - |
| | Hardness (Shore A) | 42 | 41 | 37 | 39 | 48 | 47 | 45 | - |

According to the Table 3:

In Example E5-E9, the polyurethane microcellular foams were prepared by the component B with prepolymer A1, A2, A3, respectively.

The reactivity of process for preparing the polyurethane microcellular foams was good.

Comparing with the traditional reaction system (Comparative Examples C3, 250 seconds), the demould time was significantly improved.

In Comparative Examples C5, the polyester polyols for preparing the prepolymer A4 comprised 10 wt.% succinate polyester polyol (PESSA-1), wherein, the amount of the succinic acid units was about 5 wt.%, based on 100 wt.% of the polyester polyols. The demould time of the process preparing the polyurethane microcellular foams was not reduced effectively (Comparative Examples C5, 250 seconds).

In Comparative Examples C6, the polyols for preparing the prepolymer did not comprise succinate polyester polyol, however, the component B comprised polyester polyols (PESSA-2) containing succinic acid units. The demould time of the process preparing the polyurethane microcellular foams was not reduced effectively (Comparative Examples C6, 210 seconds).

Although the present invention is illustrated through Examples, it is not limited by these Examples in any way. And the protection of this invention is based on the scope defined by the claims of this application.

## Claims

1. A reaction system for preparing polyurethane microcellular foam, comprising a component A and a component B, wherein
   component A comprises an isocyanate prepolymer, comprising a reaction product of reactant components as follows:

   a1) one or more polyisocyanates;
   a2) one or more polyester polyols, wherein the polyester polyols comprise 10 to 60 wt.% succinic acid units of the formula (I), based on 100 wt.% of the polyester polyols;

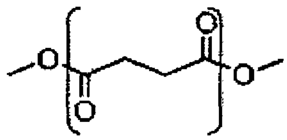

(I)

   wherein the isocyanate prepolymer has a NCO content from 16 to 20 wt.%, based on 100 wt.% of isocyanate

prepolymer; and
component B comprises:

b1) one or more polyols;
b2) from 0.001 to 10 wt.% of one or more catalysts, based on 100 wt.% of polyurethane microcellular foam; and
b3) one or more chain extenders.

**2.** The reaction system as claimed in Claim 1, wherein component B further comprises one or more additives selected from the group consisting of:

b4) one or more blowing agent; and
b5) from 0.01 to 5 wt.% of one or more surfactants, based on 100 wt.% of polyurethane microcellular foam.

**3.** The reaction system as claimed in Claim 1 or 2, wherein the polyester polyols comprise from 40 to 53 wt.% of the succinic acid units, based on 100 wt.% of polyester polyols.

**4.** A polyurethane microcellular foam comprising a reaction product of reaction component A and reaction component B, wherein
component A comprises an isocyanate prepolymer comprising the reaction product of reactant components as follows:

a1) one or more polyisocyanates;
a2) one or more polyester polyols, wherein the polyester polyols comprise from 10 to 60 wt.% succinic acid units of the formula (I), based on 100 wt.% of the polyester polyols;

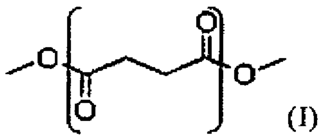
(I)

wherein the isocyanate prepolymer has a NCO content from 16 to 20 wt.%, based on 100 wt.% of isocyanate prepolymer; and
component B comprises:

b1) one or more polyols;
b2) from 0.001 to 10 wt.% of one or more catalysts, based on 100 wt.% of polyurethane microcellular foam; and
b3) one or more chain extenders.

**5.** The polyurethane microcellular foam as claimed in Claim 4, wherein component B further comprises one or more additives selected from the group consisting of :

b4) one or more blowing agent; and
b5) from 0.01 to 5 wt.% of one or more surfactants, based on 100 wt.% of polyurethane microcellular foam.

**6.** The polyurethane microcellular foam as claimed in Claim 4 or 5, wherein the polyester polyols comprise from 40 to 53 wt.% of the succinic acid units, based on 100 wt.% of polyester polyols.

**7.** The polyurethane microcellular foam as claimed in Claim 4 or 5, wherein the polyurethane microcellular foam has a density from 150 to 1100 kg/$m^3$.

**8.** An isocyanate terminated prepolymer, comprising a reaction product of a reaction system comprising reaction components as follows:

a1) one or more polyisocyanates;
a2) one or more polyester polyols, wherein the polyester polyols comprise from 10 to 60 wt.% succinic acid

units of the formula (I), based on 100 wt.% of the polyester polyols;

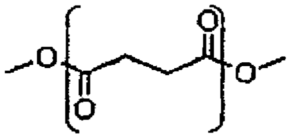

(I)

wherein the isocyanate prepolymer has a NCO content from 16 to 20 wt.%, based on 100 wt.% of isocyanate prepolymer.

**9.** The isocyanate terminated prepolymer as claimed in Claim 8, wherein the polyester polyols comprise from 40 to 53 wt.% of the succinic acid units, based on 100 wt.% of polyester polyols.

**10.** A use of the reaction system as claimed in any of Claims 1-3 in preparing a polyurethane microcellular foam.

**11.** A use of the polyurethane microcellular foam as claimed in any of Claims 4-7 in preparing a shoe.

**12.** A use of the isocyanate terminated prepolymer as claimed in any of Claims 8-9 in preparing a polyurethane.

**Patentansprüche**

**1.** Reaktionssystem zur Herstellung von mikrozellulärem Polyurethan-Schaumstoff, umfassend eine Komponente A und eine Komponente B, wobei Komponente A ein Isocyanatprepolymer umfasst, das ein Reaktionsprodukt der folgenden Reaktantkomponenten umfasst:

a1) eines oder mehrerer Polyisocyanate;
a2) eines oder mehrerer Polyesterpolyole, wobei die Polyesterpolyole 10 bis 60 Gew.-% Bernsteinsäure-Einheiten der Formel (I), bezogen auf 100 Gew.-% der Polyesterpolyole, umfassen;

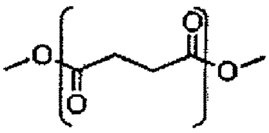

(I)

wobei das Isocyanatprepolymer einen NCO-Gehalt von 16 bis 20 Gew.-%, bezogen auf 100 Gew.-% Isocyanatprepolymer, aufweist; und
Komponente B Folgendes umfasst:

b1) ein oder mehrere Polyole;
b2) 0,001 bis 10 Gew.-% eines oder mehrerer Katalysatoren, bezogen auf 100 Gew.-% mikrozellulären Polyurethan-Schaumstoff; und
b3) einen oder mehrere Kettenverlängerer.

**2.** Reaktionssystem nach Anspruch 1, wobei Komponente B ferner ein oder mehrere Additive aus der Gruppe bestehend aus:

b4) einem oder mehreren Treibmitteln und
b5) 0,01 bis 5 Gew.-% eines oder mehrerer Tenside, bezogen auf 100 Gew.-% mikrozellulären Polyurethan-Schaumstoff;
umfasst.

**3.** Reaktionssystem nach Anspruch 1 oder 2, wobei die Polyesterpolyole 40 bis 53 Gew.-% der Bernsteinsäure-Einheiten, bezogen auf 100 Gew.-% Polyesterpolyole, umfassen.

**4.** Mikrozellulärer Polyurethan-Schaumstoff, umfassend ein Reaktionsprodukt von Reaktionskomponente A und Reaktionskomponente B, wobei
Komponente A ein Isocyanatprepolymer umfasst, das das Reaktionsprodukt der folgenden Reaktantkomponenten umfasst:

a1) eines oder mehrerer Polyisocyanate;
a2) eines oder mehrerer Polyesterpolyole, wobei die Polyesterpolyole 10 bis 60 Gew.-% Bernsteinsäure-Einheiten der Formel (I), bezogen auf 100 Gew.-% der Polyesterpolyole, umfassen;

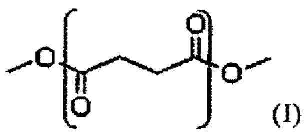
(I)

wobei das Isocyanatprepolymer einen NCO-Gehalt von 16 bis 20 Gew.-%, bezogen auf 100 Gew.-% Isocyanatprepolymer, aufweist; und
Komponente B Folgendes umfasst:

b1) ein oder mehrere Polyole;
b2) 0,001 bis 10 Gew.-% eines oder mehrerer Katalysatoren, bezogen auf 100 Gew.-% mikrozellulären Polyurethan-Schaumstoff; und
b3) einen oder mehrere Kettenverlängerer.

**5.** Mikrozellulärer Polyurethan-Schaumstoff nach Anspruch 4, wobei Komponente B ferner ein oder mehrere Additive aus der Gruppe bestehend aus:

b4) einem oder mehreren Treibmitteln und
b5) 0,01 bis 5 Gew.-% eines oder mehrerer Tenside, bezogen auf 100 Gew.-% mikrozellulären Polyurethan-Schaumstoff;
umfasst.

**6.** Mikrozellulärer Polyurethan-Schaumstoff nach Anspruch 4 oder 5, wobei die Polyesterpolyole 40 bis 53 Gew.-% der Bernsteinsäure-Einheiten, bezogen auf 100 Gew.-% Polyesterpolyole, umfassen.

**7.** Mikrozellulärer Polyurethan-Schaumstoff nach Anspruch 4 oder 5, wobei der mikrozelluläre Polyurethan-Schaumstoff eine Dichte von 150 bis 1100 kg/$m^3$ aufweist.

**8.** Isocyanatterminiertes Prepolymer, umfassend ein Reaktionsprodukt eines Reaktionssystems, das die folgenden Reaktionskomponenten umfasst:

a1) eines oder mehrerer Polyisocyanate;
a2) eines oder mehrerer Polyesterpolyole, wobei die Polyesterpolyole 10 bis 60 Gew.-% Bernsteinsäure-Einheiten der Formel (I), bezogen auf 100 Gew.-% der Polyesterpolyole, umfassen;

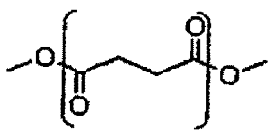
(I)

wobei das Isocyanatprepolymer einen NCO-Gehalt von 16 bis 20 Gew.-%, bezogen auf 100 Gew.-% Isocyanatprepolymer, aufweist.

**9.** Isocyanatterminiertes Prepolymer nach Anspruch 8, wobei die Polyesterpolyole 40 bis 53 Gew.-% der Bernsteinsäure-Einheiten, bezogen auf 100 Gew.-% Polyesterpolyole, umfassen.

**10.** Verwendung des Reaktionssystems nach einem der Ansprüche 1-3 bei der Herstellung eines mikrozellulären Polyurethan-Schaumstoffs.

**11.** Verwendung des mikrozellulären Polyurethan-Schaumstoffs nach einem der Ansprüche 4-7 bei der Herstellung eines Schuhs.

**12.** Verwendung des isocyanatterminierten Prepolymers nach einem der Ansprüche 8-9 bei der Herstellung eines Polyurethans.

## Revendications

**1.** Système de réaction pour la préparation d'une mousse microcellulaire de polyuréthane, comprenant un constituant A et un constituant B, dans lequel :

le constituant A comprend un prépolymère isocyanate, comprenant un produit réactionnel de constituants réactifs ci-dessous :

a1) un ou plusieurs polyisocyanates ;
a2) un ou plusieurs polyesters polyols, les polyesters polyols comprenant de 10 à 60 % en poids d'unités acide succinique selon la formule (I), relativement à 100 % en poids des polyesters polyols ;

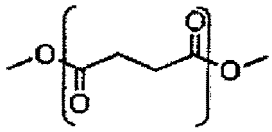
(I)

dans lequel le prépolymère isocyanate a une teneur en NCO de 16 à 20 % en poids, relativement à 100 % en poids de prépolymère isocyanate ; et
le constituant B comprend :

b1) un ou plusieurs polyols ;
b2) de 0,001 à 10 % en poids d'un ou plusieurs catalyseurs, relativement à 100 % en poids de mousse microcellulaire de polyuréthane ; et
b3) un ou plusieurs agents d'extension de chaîne.

**2.** Système de réaction selon la revendication 1, dans lequel le constituant B comprend en outre un ou plusieurs additifs sélectionnés dans le groupe constitué de :

b4) un ou plusieurs agents gonflants ; et
b5) de 0,01 à 5 % en poids d'un ou plusieurs tensioactifs, relativement à 100 % en poids de mousse microcellulaire de polyuréthane.

**3.** Système de réaction selon la revendication 1 ou 2, dans lequel les polyesters polyols comprennent de 40 à 53 % en poids des unités acide succinique, relativement à 100 % en poids de polyesters polyols.

**4.** Mousse microcellulaire de polyuréthane comprenant un produit réactionnel du constituant réactif A et du constituant réactif B, dans laquelle :

le constituant A comprend un prépolymère isocyanate comprenant le produit réactionnel de constituants réactifs ci-dessous :

a1) un ou plusieurs polyisocyanates ;
a2) un ou plusieurs polyesters polyols, les polyesters polyols comprenant de 10 à 60 % en poids d'unités acide succinique selon la formule (I), relativement à 100 % en poids des polyesters polyols ;

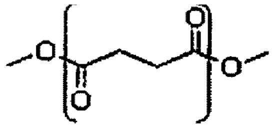

(I)

dans laquelle le prépolymère isocyanate a une teneur en NCO de 16 à 20 % en poids, relativement à 100 % en poids de prépolymère isocyanate ; et le constituant B comprend :

b1) un ou plusieurs polyols ;
b2) de 0,001 à 10 % en poids d'un ou plusieurs catalyseurs, relativement à 100 % en poids de mousse microcellulaire de polyuréthane ; et
b3) un ou plusieurs agents d'extension de chaîne.

**5.** Mousse microcellulaire de polyuréthane selon la revendication 4, dans laquelle le constituant B comprend en outre un ou plusieurs additifs sélectionnés dans le groupe constitué de :

b4) un ou plusieurs agents gonflants ; et
b5) de 0,01 à 5 % en poids d'un ou plusieurs tensioactifs, relativement à 100 % en poids de mousse microcellulaire de polyuréthane.

**6.** Mousse microcellulaire de polyuréthane selon la revendication 4 ou 5, dans laquelle les polyesters polyols comprennent de 40 à 53 % en poids des unités acide succinique, relativement à 100 % en poids de polyesters polyols.

**7.** Mousse microcellulaire de polyuréthane selon la revendication 4 ou 5, la mousse microcellulaire de polyuréthane ayant une densité de 150 à 1 100 kg/$m^3$.

**8.** Prépolymère à terminaisons isocyanate, comprenant un produit réactionnel d'un système de réaction comprenant des constituants réactifs ci-dessous :

a1) un ou plusieurs polyisocyanates ;
a2) un ou plusieurs polyesters polyols, les polyesters polyols comprenant de 10 à 60 % en poids d'unités acide succinique selon la formule (I), relativement à 100 % en poids des polyesters polyols ;

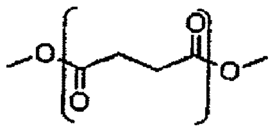

(I)

dans lequel le prépolymère isocyanate a une teneur en NCO de 16 à 20 % en poids, relativement à 100 % en poids du prépolymère isocyanate.

**9.** Prépolymère à terminaisons isocyanate selon la revendication 8, dans lequel les polyesters polyols comprennent de 40 à 53 % en poids des unités acide succinique, relativement à 100 % en poids de polyesters polyols.

**10.** Utilisation du système de réaction selon l'une quelconque des revendications 1 à 3 dans la préparation d'une mousse microcellulaire de polyuréthane.

**11.** Utilisation de la mousse microcellulaire de polyuréthane selon l'une quelconque des revendications 4 à 7 dans la préparation d'une chaussure.

**12.** Utilisation du prépolymère à terminaisons isocyanate selon l'une quelconque des revendications 8 à 9 dans la préparation d'un polyuréthane.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Non-patent literature cited in the description

- Polyurethane Handbook: Chemistry, Raw Materials, Processing, Application, Properties
- *Reaction System for Preparing Isocyanate Terminated Prepolymer*